# EUROPÄISCHE PATENTANMELDUNG

(11) **EP 4 148 650 A1**
(43) Veröffentlichungstag der Anmeldung: **15.03.2023**
(21) Anmeldenummer: 22194585.0
(22) Anmeldetag: 08.09.2022
(51) Int. Cl.: G06Q 30/0601

(54) **EINKAUFSVERZÖGERUNGSEINRICHTUNG UND VERFAHREN ZUM VERZÖGERN EINES ONLINE-KAUFES**

(30) Priorität: 10.09.2021 DE 102021123480
(71) Anmelder: Jensen, Ida Marie Louise, 30539 Hannover (DE); Jensen, Mats-Ivar, 30539 Hannover (DE)
(72) Erfinder: Jensen, Ida Marie Louise, 30539 Hannover (DE); Jensen, Mats-Ivar, 30539 Hannover (DE)
(74) Vertreter: Eisenführ Speiser

(57) **Zusammenfassung**

Einkaufsverzögerungseinrichtung zum Verzögern eines Online-Kaufes, die ein Empfangsmodul zum Empfangen und zum Verhindern einer Weiterleitung von Kaufdaten eines Ursprungs-Online-Einkaufes umfasst, welches dazu eingerichtet ist, ein Weiterleiten der Kaufdaten an eine Zieladresse über ein Kommunikationsnetzwerk zu verhindern und die empfangenen Kaufdaten einem Speichermodul bereitzustellen; die ein Speichermodul umfasst, das dazu eingerichtet ist, die bereitgestellten Kaufdaten zu speichern; das ein Verzögerungsmodul umfasst, das dazu eingerichtet ist, die im Speichermodul gespeicherten Kaufdaten nach Ablauf eines festgelegten Verzögerungszeitraumes einem Erinnerungsmodul bereitzustellen; das ein Erinnerungsmodul umfasst, das dazu eingerichtet ist, eine Kauferinnerung auszulösen, wenn der festgelegte Verzögerungszeitraum für den Ursprungs-Online-Einkauf abgelaufen ist; das ein Autorisierungsmodul umfasst, das wenigstens dazu eingerichtet ist, basierend auf einem empfangenen Autorisierungsbefehl, ein Weiterleiten der im Speichermodul gespeicherten Kaufdaten des Ursprungs-Online-Einkaufes an ein Sendemodul auszulösen; und das ein Sendemodul umfasst, das dazu eingerichtet ist, die weitergeleiteten Kaufdaten des Ursprungs-Online-Einkaufes aus dem Speichermodul an die Zieladresse über das Kommunikationsnetzwerk abzusenden.

## Beschreibung

Die vorliegende Erfindung betrifft eine Einkaufsverzögerungseinrichtung zum Verzögern eines Online-Kaufes. Zudem betrifft die vorliegende Erfindung ein Verfahren zum Verzögern eines Online-Kaufes.

Das Internet bietet mittlerweile die Möglichkeit nahezu Alles online zu kaufen. Nicht alle Kaufentscheidung der Online-Käufer sind im ersten Moment die, die tatsächlich und schlussendlich gewollt sind. Ein Mensch besitzt im Durchschnitt mehrere tausend Gegenstände, welche er nur zu einem kleinen Teil benutzt. Und ein erheblicher Teil der online gekauften Produkte werden wieder zurückgeschickt, was zu einer Verdoppelung der Transportstrecken und verbrauchten Ressourcen für zurückgeschickte Waren führt.

Bei Online-Käufen in einem Online-Shop kann es somit durch impulsive Kaufentscheidungen eines Kunden dazu kommen, dass ein Kauf von Gegenständen zustande kommt, den der Kunde zu einem späteren Zeitpunkt aber eventuell gar nicht mehr haben möchte.

Solche impulsiven Kaufentscheidungen werden zum Teil durch Marketingmaßnahmen gefördert, indem beispielsweise Ressourcenknappheit vorgegeben wird oder ein Kauf zeitlich beschränkt wird, um Zeitdruck auf einen Kunden auszuüben.

Es wäre daher wünschenswert, den Online-Kauf um eine noch nicht vorhandene technische Ebene zur Einsparung persönlicher und natürlicher Ressourcen zu erweitern, ohne den Verzicht auf die tatsächliche Kauferfahrung.

In der prioritätsbegründenden deutschen Patentanmeldung hat das Deutsche Patent- und Markenamt das folgende Dokument recherchiert: US 2020/0387954 A1.

Aufgabe der vorliegenden Erfindung ist es deshalb, eines der oben genannten Probleme zu adressieren, den allgemeinen Stand der Technik zu verbessern oder eine Alternative zu bisher Bekanntem bereitzustellen. Insbesondere soll eine Lösung bereitgestellt werden, mit der ungewollte Kaufentscheidungen reduziert werden können zur Einsparung persönlicher und natürlicher Ressourcen.

Erfindungsgemäß wird dazu eine Einkaufsverzögerungseinrichtung zum Verzögern eines Online-Kaufes gemäß Anspruch 1 vorgeschlagen.

Die Einkaufsverzögerungseinrichtung betrifft demnach den Online-Einkauf in einem Online-Shop. Die Einkaufsverzögerungseinrichtung ist dazu vorgesehen, einem Nutzer die Möglichkeit zu bieten eine Online-Kauferfahrung ohne aktiven Verzicht zu machen, welche automatisch, technisch durch die Module verhindert, zwischengespeichert, verzögert, erneut präsentiert und individuell finalisiert bzw. abgesendet wird.

Die Einkaufsverzögerungseinrichtung ist vorzugsweise mit einem Computerprogramm in einer Berechnungseinheit auf einem Endgerät implementiert und nutzt insbesondere eine Vielzahl von funktionalen Einheiten des Endgerätes. Es versteht sich, dass sich das Computerprogramm auf ein endgerätunabhängiges Softwareprogramm bezieht.

Als Endgerät werden vorzugsweise ein Computer, ein Server, ein Mobiltelefon, ein Tablet oder dergleichen vorgeschlagen.

Die Einkaufsverzögerungseinrichtung kann mit einem Computerprogramm oder SoftwareProgramm zur Anwendung auf elektronischen Endgeräten implementiert sein, die mehreren Funktionseinheiten aufweist, nämlich einzelne Module. Es versteht sich, dass die Einkaufsverzögerungseinrichtung auf beliebigen elektronischen Endgeräten implementiert sein kann, die dazu eingerichtet sind, eine Softwareanwendung auszuführen und die aus mehreren Funktionseinheiten ausgebildet sind.

In einem ersten Beispiel ist die Einkaufsverzögerungseinrichtung mit einer Softwareapplikation auf einem Smartphone implementiert und verhindert, das mit dem Smartphone hinterlegte Kaufdaten an einen Onlineshop abgesendet werden.

In einem zweiten Beispiel ist die Einkaufsverzögerungseinrichtung mit einem Browserplugin auf einem Computer implementiert und verhindert, dass die Einkaufsdaten an einen Server übertragen werden.

Die Einkaufsverzögerungseinrichtung kann auch als automatischer Online-Einkaufsassistent oder Verzögerer aufgefasst werden, der eine Verzögerung eines Kaufereignisses auslöst. Der Online-Kauf kann synonym auch als Kaufereignis oder Kaufvorgang aufgefasst werden.

Die Einkaufsverzögerungseinrichtung umfasst ein Empfangsmodul zum Empfangen und zum Verhindern einer Weiterleitung von Kaufdaten eines Ursprungs-Online-Einkaufes, wobei das Empfangsmodul dazu eingerichtet ist, ein Weiterleiten der Kaufdaten an eine Zieladresse über ein Kommunikationsnetzwerk zu verhindern und die empfangenen Kaufdaten einem Speichermodul bereitzustellen. Es wird also vorgeschlagen, dass das Empfangsmodul durch den Abschluss eines Kaufes angesprochen wird und diesen gleichzeitig automatisch verhindert. Das Empfangsmodul wird also verwendet, um beim Online-Kauf einen Ursprungs-Online-Einkauf des Nutzers gegenüber dem jeweiligen Verkäufer automatisch zu verhindert bzw. nicht auszuführen. Die Einkaufsdaten können beispielweise über eine Benutzerschnittstelle manuell von einem Nutzer in einem Online-Shop eingegeben worden sein. Die Zieladresse ist beispielsweise eine Serveradresse eines Onlineshops, indem ein Kauf von einem Nutzer erfolgt ist. Das Kommunikationsnetzwerk ist beispielsweise ein Verbund von Rechnernetzwerken, also z.B. das Internet oder dergleichen. Das Empfangsmodul ist somit zum Datenaustausch mit dem Kommunikationsnetzwerk eingerichtet. Der Ursprungs-Online-Einkaufes kann auch als Erstkauf aufgefasst werden. Das Empfangsmodul verhindert demnach also den Ursprungs-Online-Einkauf gegenüber den jeweiligen Verkäufern und leitet die Kaufdaten an das Speichermodul um bzw. stellt die Kaufdaten dem Speichermodul bereit. Kaufdaten sind beispielsweise Nutzerdaten, die ein Nutzer z.B. in einem Online-Shop eingegeben hat oder dort hinterlegt sind und/oder auch Daten des Online-Shops, z. B. dessen Adressdaten, oder auch Produktdaten, wie z.B. eine Produktmenge, ein Produkttyp, ein Produktpreis oder dergleichen. Kaufdaten bezeichnen somit Daten, die für eine Abwicklung eines Online-Kaufes verwendet werden.

Das Bereitstellen der Kaufdaten kann auch als ein Weiterleiten aufgefasst werden, also, dass das Empfangsmodul die empfangenen Kaufdaten an ein bzw. das Speichermodul weiterleitet.

Es wird also vorgeschlagen, ein Kaufportal eines Warenanbieters mit einer Zwischenebene auszubilden, die verhindert, dass die Kaufdaten direkt an den Warenanbieterweitergeleitet werden. Durch die Zwischenebene werden die Eingaben eines Nutzers nicht an den Warenanbieter direkt weitergeleitet, sondern zwischengespeichert und erst nach Ablauf einer Frist erneut aufgerufen, wie nachfolgend beschrieben wird. Das Verhindern der Weiterleitung kann beispielsweise mit einer in einem Online-Shop überlagerten Schaltfläche oder mit einem überlagerten Eingabefeld umgesetzt werden und/oder mittels einer nachträglichen Anpassung einer bestehenden Schaltfläche oder eines bestehenden Eingabefeldes eines Online-Shops.

Es versteht sich, dass ein Modul ein Softwaremodul oder Hardwaremodul sein kann, oder eine Mischform aus Software- und Hardwaremodulen.

Zudem umfasst die Einkaufsverzögerungseinrichtung ein Speichermodul, das dazu eingerichtet ist, die bereitgestellten Kaufdaten zu speichern. Durch das Speichermodul werden die Daten von dem zuvor verzögerten Online-Kauf automatisch gesammelt und gespeichert. Das Speichermodul wird somit verwendet, um alle Einkaufs-Parameter, welche durch die erkannten Ursprungs-Online-Einkäufe generiert werden, zu speichern. Es wird also ein Speichermodul aufgesetzt, über den die Aufnahme und Weitergabe der Kaufdaten umgesetzt werden. Das Speichermodul hat also die Funktion eines Datenspeichers in dem die Kaufdaten hinterlegt und gespeichert werden. Der Datenspeicher ist vorzugsweise als Hardwarespeicher auf einem Endgerät ausgebildet oder als serverbasierter Online-Speicher ausgebildet. Das Speichermodul speichert demnach die Daten des Ursprungs-Online-Einkaufs. Vorzugsweise ist der Datenspeicher als relationale Datenbank ausgebildet.

Zudem umfasst die Einkaufsverzögerungseinrichtung ein Verzögerungsmodul, das dazu eingerichtet ist, die im Speichermodul gespeicherten Kaufdaten nach Ablauf eines festgelegten Verzögerungszeitraumes einem Erinnerungsmodul bereitzustellen. Das Verzögerungsmodul wird also verwendet, um die Verbindung zwischen Speichermodul und dem Erinnerungsmodul zu schaffen und den Zeitraum der Verzögerung für den Ursprungs-Online-Einkauf festzulegen und umzusetzen. Das Verzögerungsmodul hat die Funktion die endgültige Kaufentscheidung für den, durch das Empfangsmodul verhinderten und durch das Speichermodul zwischengespeicherten, Online-Kauf, um einen individuellen Zeitraum automatisch in die Zukunft zu verschieben. Dazu sind beispielsweise festgelegte Verzögerungszeitraume in dem Verzögerungsmodul hinterlegt. Die Verzögerungszeiträume sind vorzugsweise mit einem Ablauftimer implementiert, und besonders bevorzugt ist jedem Online-Einkauf bzw. jeder Einkaufsdaten ein individueller Ablauftimer zugeordnet. Die festgelegten Verzögerungszeitraumes können manuell durch eine Nutzereingabe oder automatisiert festgelegt sein. Der Verzögerungszeitraum kann auch als Verzögerungszeit oder Verzögerungsdauer aufgefasst werden. Das Verzögerungsmodul verzögert demnach den Ursprungs-Online-Einkauf um den Verzögerungszeitraum und schafft vorzugsweise die Verbindung zwischen Speichermodul und Erinnerungsmodul.

Zudem umfasst die Einkaufsverzögerungseinrichtung ein Erinnerungsmodul, das dazu eingerichtet ist, eine Kauferinnerung auszulösen, wenn der festgelegte Verzögerungszeitraum für den Ursprungs-Online-Einkauf abgelaufen ist. Das Erinnerungsmodul ist vorzugsweise dazu eingerichtet, automatisch die verzögerten Einkäufe zu organisieren und/oder die Einkäufe eines Nutzers an das Entscheidungsmodul weiterzuleiten. Das Erinnerungsmodul wird also verwendet, um den Nutzer zu informieren, dass der Verzögerungszeitraum für den Ursprungs-Online-Einkauf abgelaufen ist. Die Kauferinnerung ist vorzugsweise ein optischer Indikator, der einem Nutzer auf dem Endgerät angezeigt wird. In einer besonderen Ausführungsform ist das Erinnerungsmodul dazu eingerichtet eine Push-Up-Nachricht oder eine automatisierte Email oder dergleichen als Kauferinnerung auszulösen, die einem Nutzer des Endgerätes angezeigt wird, insbesondere wenn der festgelegte Verzögerungszeitraumes abgelaufen ist. Das Erinnerungsmodul erinnert demnach einen Nutzer an den Ursprungs-Online-Einkauf nach Ablauf des im Verzögerungsmodul festgelegten und umgesetzten Verzögerungszeitraumes.

Zudem umfasst das Einkaufsverzögerungseinrichtung ein Autorisierungsmodul, das wenigstens dazu eingerichtet ist, basierend auf einem empfangenen Autorisierungsbefehl, ein Weiterleiten der im Speichermodul gespeicherten Kaufdaten des Ursprungs-Online-Einkaufes an ein Sendemodul auszulösen. Das Autorisierungsmodul führt dem Nutzer automatisch die aus dem verzögerten Kauf zwischengespeicherten Daten nach dem Verzögerungszeitraum vor und lässt dem Nutzer die Möglichkeit zu einer teilweise oder vollständig neuen Kaufentscheidung. Eine neue Kaufentscheidung, die zurückgestellt wurde und wieder aufkommt, kann auch als Zweit-Online-Einkauf aufgefasst werden. Das Autorisierungsmodul wird also verwendet, um dem Nutzer die Möglichkeit zu bieten über die einzelnen Teile des verzögerten Einkaufs erneut zu entscheiden. Das Autorisierungsmodul empfängt beispielsweise als Autorisierungsbefehl eine manuell über eine Benutzerschnittstelle des Endgerätes eingegebene Bestätigung des Kaufes. In einem konkreten Beispiel wird dem Nutzer optisch eine Auswahl angezeigt, ob der Nutzer den Kauf final tätigen möchte. Wenn der Nutzer den Kauf bestätigt, beispielsweise durch einen Klick auf oder in einem Eingabefeld, erfolgt das Weiterleiten der zwischengespeicherten Daten aus dem Speichermodul. Zudem umfasst die Einkaufsverzögerungseinrichtung ein Sendemodul, das dazu eingerichtet ist, die weitergeleiteten Kaufdaten des Ursprungs-Online-Einkaufes aus dem Speichermodul an die Zieladresse über das Kommunikationsnetzwerk abzusenden. Das Sendemodul reagiert auf gewählte Aktion auf Ebene des Entscheidungsmoduls. Als Absenden kann dabei auch ein Auslösen aufgefasst werden, also, dass das Sendemodul dazu eingerichtet ist, ein Absenden der weitergeleiteten Kaufdaten des Ursprungs-Online-Einkaufes aus dem Speichermodul an die Zieladresse über das Kommunikationsnetzwerk auszulösen.

Zudem ist das Sendemodul vorzugsweise dazu eingerichtet, den zwischengespeicherten Einkauf zu verwerfen oder den Nutzer zu seiner Einkaufsauswahl auf die entsprechenden Websites zu führen. Das Sendemodul wird also verwendet, um das Ergebnis einer negativen oder positiven Kaufbestätigung der Entscheidungseinheit automatisiert für den Nutzer zu verarbeiten und auszuführen. Die Zieladresse kann somit auch eine Homepage sein, in der die gespeicherten Einkaufsdaten automatisiert erneut in Eingabefelder eingefügt werden und ein Bestellvorgang ausgelöst wird. Das Sendemodul ist also zum Datenaustausch mit dem Kommunikationsnetzwerk eingerichtet.

Somit wird eine Lösung bereitgestellt, die dem Nutzer die Möglichkeit seine Online-Käufe ohne Einschränkung auszuleben, jedoch mit der Chance einzelne oder alle Kaufentscheidungen vereinfacht zu überdenken. Der erweiterte Nutzen ist somit, ein Einsparen persönlicher Ressourcen, die Einschränkung von benötigtem Frachtverkehr durch verhinderte und am Ende ungewollte Online-Käufe ohne, dass der Nutzer der Erfindung bei seinen Online-Einkaufvorgängen aktiv verzichten muss.

Der positive Effekt der Einkaufsverzögerungseinrichtung besteht somit unter anderem darin, dass, wenn ein Nutzer einen Online-Einkauf tätigt, mit der Einkaufsverzögerungseinrichtung der Einkauf automatisch verzögert wird.

Der Einkauf wird dem Nutzer nach einem Verzögerungszeitraum dann wieder zur erneuten Entscheidung vorlegt.

In Verbindung mit einer Auswertung und Kategorisierung der Ursprungs-Online-Einkäufe wird dem Nutzer die Reflektion seines Einkaufsverhaltens ermöglicht und dadurch die Häufigkeit von Fehlkäufen durch emotionale/unreflektierte Online-Einkäufe reduziert.

Dadurch unterstützt die Einkaufsverzögerungseinrichtung den Nutzer dabei, Käufe von ungewollten Produkten und Produktgruppen zu vermeiden, insbesondere solche, bei denen es aufgrund von Erfahrungen aus der Vergangenheit bekannt ist, dass Ursprungs-Online-Einkäufe getätigt werden und eine gewisse Zeit später diese nicht noch einmal in gleicher Form getätigt werden würden, wenn aufwandslos eine erneute Entscheidung über den Ursprungs-Online-Einkauf möglich wäre. Die vorliegende Einkaufsverzögerungseinrichtung bietet somit eine individuelle Einkaufsverbesserung für den Nutzer. U.a. kann der Nutzer Geld und Zeit vereinfacht einsparen. Zudem werden in der Gesamtbetrachtung des Online-Marktes Ressourcen dadurch eingespart, dass unnötige Verschwendung, durch u.a. Transportstrecken/ -stunden und Verpackungsmaterial, vermieden werden.

Vorzugsweise weist die Einkaufsverzögerungseinrichtung zudem ein Standbymodul auf, wobei das Standbymodul dazu eingerichtet ist, Einkaufsvorgänge zu erkennen und die übrigen Module der Einkaufsverzögerungseinrichtung zu aktivieren. So verbraucht die Einkaufsverzögerungseinrichtung weniger Ressourcen, wie Strom oder Rechenleistung auf dem Endgerät. Das Standbymodul erhält die Reaktionsbereitschaft der Einkaufsverzögerungseinrichtung zu jeder Zeit auf die möglichen Online-Einkäufe.

Vorzugsweise umfasst die Einkaufsverzögerungseinrichtung zudem ein Auswertungsmodul zur Auswertung der vom Nutzer getätigten Ursprungs-Online-Einkäufe und/oder Zweit-Online-Einkäufe, wobei vorzugsweise das Auswertungsmodul dazu eingerichtet ist, Entscheidungsmuster durch eine Auswertung vorangegangener Entscheidungen eines Nutzers zu erkennen und/oder individualisierte Vorschläge auf Basis der erkannten Entscheidungsmuster anzuzeigen. So kann die Funktionalität der Einkaufsverzögerungseinrichtung durch die Auswertung vorangegangener Entscheidungen für den Nutzer zu verbessern oder ausgeweitet werden.

Vorzugsweise wird vorgeschlagen, ein Verhältnis aus letztendlich getätigten Einkäufen zu den Ursprungs-Online-Einkäufen auszuwerten. Die letztendlich getätigten Einkäufe können auch als autorisierte oder bestätigte Einkäufe aufgefasst werden. Dieses Verhältnis wird in Abhängigkeit zu der Verzögerungsdauer bzw. zu dem Verzögerungszeitraum betrachtet.

Vorzugsweise wird die Entwicklung des Verhältnisses bei veränderter Verzögerungsdauer zudem anhand von verschiedenen Produkt-Kategorien ausgewertet. So kann die optimale Verzögerungsdauer herausgefunden werden, welche die Produkte schnellstmöglich zu Entscheidung bereitstellt, jedoch unter dem Leitgedanken der größtmöglichen Verhinderung von (eigentlich) ungewollten Online-Einkäufen. Damit kann ein weitestgehend selbstbestimmter und reflektierter Einkauf anhand der Daten erreicht werden. Durch diese Auswertung wird zudem herausgefunden mit welchen Verzögerungszeiträumen ein solcher Einkauf, wie z.B. in der Einleitung beschrieben, erreicht werden kann, ohne, dass der Ursprungseinkauf zu lange zurückliegt, sodass eine tatsächliche Reflektion des Ursprungseinkaufen nicht mehr wirksam möglich ist.

Vorzugsweise ist das Speichermodul zudem dazu eingerichtet, um die gespeicherten Kaufdaten zu kategorisieren, und besonders bevorzugt die kategorisierten gespeicherten Kaufdaten optisch anzuzeigen. So kann ein kategorisierter Überblick der aktuell hinterlegten Käufe optisch auf einem Endgerät dargestellt werden.

Vorzugsweise ist das Verzögerungsmodul zudem dazu eingerichtet ist, dass der Verzögerungszeitraum manuell durch eine Nutzereingabe veränderbar ist und/oder das Verzögerungsmodul dazu eingerichtet ist, automatisiert den Verzögerungszeitraum zu bestimmen. So kann der Nutzer entweder eigenständig die Verzögerungszeit festlegen oder die Einkaufsverzögerungseinrichtung bestimmt eigenständig eine neue Verzögerungszeit.

Vorzugsweise wird vorgeschlagen, dass das Erinnerungsmodul zudem dazu eingerichtet ist, den Nutzer über den Ablauf des Verzögerungszeitraumes auf elektronischem Weg zu informieren und/oder dem Nutzer eine Auswahlmöglichkeit bereitstellt, direkt zur einer grafischen Benutzeroberfläche des Autorisierungsmoduls weitergeleitet zu werden, um dort die Kaufentscheidung zu bestätigen oder zu verwerfen oder zurückzustellen. Es wird also vorgeschlagen eine Verlinkung von der Kauferinnerung zu einer grafischen Benutzeroberfläche des Autorisierungsmoduls vorgeschlagen, in dem der Nutzer die Kaufentscheidung treffen kann, den Kauf zu bestätigen, den Kauf zu verwerfen oder den Kauf zurückzustellen.

Vorzugsweise wird vorgeschlagen, dass das Autorisierungsmoduls zudem dazu eingerichtet ist, Zusatzkaufdaten anzuzeigen, insbesondere um dem Nutzer bei einer erneuten Entscheidung einen erweiterten Entscheidungshorizont bereitzustellen. Es wird also vorgeschlagen, einem Benutzer bei der Autorisierung des Online-Einkaufes diversen Parametern anzuzeigen. Der Nutzer kann die Zusatzkaufdaten dann ansehen und dadurch eine weniger impulsive Kaufentscheidung treffen. Die Zusatzkaufdaten können beispielsweise sein, ein Wert eines aktuellen Kontostandes, ein berechneter Wert einer CO₂-Einsparung, eine berechneter Wert einer Einsparung von Geld, eine Zinsberechnung und/oder dergleichen. Die Erweiterung des Entscheidungshorizontes meint somit das Ersetzen der reinen Entscheidungsfrage "Kaufen: Ja oder Nein" durch ein Abwägen des Kaufes anhand diverser Parameter. Beispiele für solche Parameter sind wie beschriebene die Einsparung von CO₂ durch einen verhinderten Kauf (diese CO2-Menge in anschauliche Vergleiche setzen), das gesparte Geld (+ z.B. aufgezinst auf 10 Jahre -> das wäre es in 10 Jahren Wert) oder dergleichen. Diese einzelnen Parameter bzw. die Zusatzkaufdaten können für einen einzelnen Einkauf und/oder für eine Gesamtbetrachtung aller Einkäufe ausgewertet und/oder angezeigt werden. Dies dient dazu einen wirklich kritischen Käufer zu erzeugen, der das selektiert was er wirklich haben möchte.

Vorzugsweise wird vorgeschlagen, dass das Autorisierungsmodul zudem dazu eingerichtet ist, eine manuelle Nutzerauswahl anzuzeigen, wobei die Nutzerauswahl eine Bestätigungsauswahl, eine Ablehnungsauswahl und eine Zurückstellungsauswahl umfasst. Es wird also vorgeschlagen, dass dem Nutzer eine Auswahl angezeigt wird und der Nutzer entscheiden kann, ob der Einkauf getätigt werden soll, er zurückgestellt werden soll oder er gelöscht werden soll. Die Auswahl kann beispielsweise an einem Display des Endgerätes grafisch angezeigt werden.

In einer besonders bevorzugten Ausführungsform wird vorgeschlagen, dass bei einer Bestätigung des Ursprungs-Online-Einkaufes durch den Nutzer eine automatisierte Weiterleitung basierend auf den Kaufdaten zu einem Online-Shop erfolgt und/oder die hinterlegten Kaufdaten in den Online-Shop automatisiert eingefügt werden, und besonderes bevorzugt der Kauf automatisch ausgelöst wird, oder bei einer Ablehnung des Ursprungs-Online-Einkaufes durch den Nutzer der Kauf verworfen wird, indem insbesondere die Kaufdaten gelöscht, überschrieben oder in ein Archiv eingefügt werden, oder bei einer Zurückstellung des Ursprungs-Online-Einkaufes durch den Nutzer der Kauf mit einem neuen Verzögerungszeitraum in dem Speichermodul gespeichert werden. Es wird also vorgeschlagen, dass Autorisierungsmoduls eine grafische Anzeige umfasst und einem Nutzer die Möglichkeit bereitgestellt wird, eine Auswahl zu treffen, wie mit dem Ursprungs-Online-Einkauf weiter verfahren werden soll. Die automatisierte Weiterleitung zu einem Online-Shop kann vorzugsweise erfolgen, indem eine Internetseite bzw. Webadresse eines Online-Shops automatisiert aufgerufen wird, die in den Kaufdaten gespeichert ist. Die automatisierte Weiterleitung kann also als auch automatisierter Aufruf einer Webseite aufgefasst werden. Für den Aufruf kann die Einkaufsverzögerungseinrichtung z. B. die Adressdaten bzw. einen Link des Online-Shops in den Kaufdaten speichern.

Vorzugsweise verhindert das Empfangsmodul mit wenigstens einer überlagerten Schaltfläche und/oder mit wenigstens einem überlagerten Eingabefeld eine Weiterleitung von Kaufdaten eines Ursprungs-Online-Einkaufes an einen Online-Shop. Zusätzlich oder alternativ ist das Empfangsmodul vorzugsweise dazu eingerichtet, wenigstens eine bestehende Schaltfläche und/oder wenigstens ein bestehendes Eingabefeld eines Online-Shops nachträglich anzupassen, um eine Weiterleitung von Kaufdaten eines Ursprungs-Online-Einkaufes an den Online-Shop zu verhindern. Die Schaltflächen und/oder Eingabefelder können auch als Eingabeelemente aufgefasst werden, in die ein Nutzer eines Online-Shops Eingaben tätigt, wie beispielsweise Buttons, Texteingabefelder oder dergleichen. Es wird also vorgeschlagen, dass durch einen Nutzer eingegebene Formulardaten eines Online-Shops nicht direkt an den Online-Shop geschickt werden, sondern es ist eine Zwischenebene vorgesehen, mit der die Einkaufsdaten temporär zwischengespeichert werden, ohne diese direkt an den Online-Shop zu versenden. Ein nachträgliches Anpassen kann beispielsweise erfolgen, indem eine hinterlegte Zieladresse eines Online-Shops mit einer Zieladresse des Datenspeichers ersetzt wird, nachdem die Zieladresse des Online-Shops ausgelesen und zwischengespeichert wurde. So werden die Einkaufdaten nicht an den Online-Shop geschickt, sondern an den Datenspeicher bzw. an das Speichermodul.

Vorzugsweise ist das Empfangsmodul mit einer sonstigen elektronischen Schnittstelle dazu eingerichtet, eine Weiterleitung von Kaufdaten eines Ursprungs-Online-Einkaufes an einen Online-Shop zu verhindern. Als sonstige elektronische Schnittstelle kann beispielsweise eine Datenschnittstelle oder Softwareschnittelle oder dergleichen vorgesehen sein.

Vorzugsweise ist das Empfangsmodul dazu eingerichtet, Eingaben in ein online Formular, insbesondere eines Online-Shops, zu erkennen und eine Weiterleitung von in das online Formular eingegebenen Kaufdaten zu verhindern, um eine Weiterleitung von Kaufdaten eines Ursprungs-Online-Einkaufes an einen Online-Shop zu verhindern. Die online Formulare können auch als Webformulare aufgefasst werden, wie z.B. HTML-Formulare.

In einer weiteren Ausführungsform wird vorgeschlagen, dass ein Nutzer nicht nur auf entsprechenden Links zurückgeleitet werden, um einen Ursprungs-Online-Einkauf nach der Entscheidung durchzuführen, sondern ein Nutzer kann durch eine Bestätigung einen Kaufprozess auslösen, ohne dass jeder einzelne Ursprungs-Online-Einkauf noch einmal bei den entsprechenden Anbietern, nach der Weiterleitung auf deren Seite durch das Programm, vom Nutzer bestätigt werden muss. Dies führt die Einkaufsverzögerungseinrichtung automatisiert durch. Es wird also vorzugsweise vorgeschlagen, dass die Einkaufsverzögerungseinrichtung dazu eingerichtet ist, die gespeicherten Kaufdaten automatisiert in Eingabefelder eines Online-Shops einzufügen und einen Kauf auszulösen, insbesondere wenn ein Nutzer den Kauf bestätigt hat. Dies kann auch als Autofill-Funktion aufgefasst werden. Vorzugsweise ist das Sendemodul zum automatischen Ausfüllen von Eingabefeldern eines Online-Shops mit den gespeicherten Kaufdaten eingerichtet. Dies soll der vereinfachten Handhabung und dem höheren Nutzen des Programms dienen.

In einer weiteren erfindungsgemäßen Ausführungsform wird ein Verfahren zum Verzögern eines Online-Kaufes vorgeschlagen, dass die Schritte umfasst:
Empfangen von Kaufdaten eines Ursprungs-Online-Einkaufes mit einem Empfangsmodul, wobei das Empfangsmodul dazu eingerichtet ist, ein Weiterleiten der Kaufdaten an eine Zieladresse über ein Kommunikationsnetzwerk zu verhindern und die empfangenen Kaufdaten einem Speichermodul bereitzustellen;
Speichern der bereitgestellten Kaufdaten mit ein Speichermodul, das dazu eingerichtet ist, die bereitgestellten Kaufdaten zu speichern;
Verzögertes Bereitstellen der im Speichermodul gespeicherten Kaufdaten nach Ablauf eines festgelegten Verzögerungszeitraumes an ein Erinnerungsmodul mit einem Verzögerungsmodul, das dazu eingerichtet ist, die im Speichermodul gespeicherten Kaufdaten nach Ablauf eines festgelegten Verzögerungszeitraumes dem Erinnerungsmodul bereitzustellen;
Auslösen einer Kauferinnerung mit einem Erinnerungsmodul, das dazu eingerichtet ist, die Kauferinnerung auszulösen, wenn der festgelegte Verzögerungszeitraum für den Ursprungs-Online-Einkauf abgelaufen ist;
Auslösen einer Weiterleitung der im Speichermodul gespeicherten Kaufdaten des Ursprungs-Online-Einkaufes an ein Sendemodul mit einem Autorisierungsmodul, das wenigstens dazu eingerichtet ist, basierend auf einem empfangenen Autorisierungsbefehl, ein Weiterleiten der im Speichermodul gespeicherten Kaufdaten des Ursprungs-Online-Einkaufes an ein Sendemodul auszulösen; und
Absenden der weitergeleiteten Kaufdaten des Ursprungs-Online-Einkaufes aus dem Speichermodul an die Zieladresse über ein Kommunikationsnetzwerk mit einem Sendemodul, das dazu eingerichtet ist, die weitergeleiteten Kaufdaten des Ursprungs-Online-Einkaufes aus dem Speichermodul an die Zieladresse über das Kommunikationsnetzwerk abzusenden.

Die Vorteile, Erläuterungen und Definitionen zu der zuvor beschriebenen Einkaufsverzögerungseinrichtung finden entsprechend analog Anwendung für das vorgeschlagene Verfahren.

Es wird also ein computerimplementiertes Verfahren vorgeschlagen, das vorzugsweise auf einem Endgerät implementiert ist und von diesem ausgeführt wird.

Vorzugsweise umfasst das Verfahren den zusätzlichen Schritt Auswerten der mit dem Autorisierungsmodul empfangenen Autorisierungsbefehle und/oder Auswerten der empfangenen Einkaufsdaten. Auf Basis der Auswertung kann die Einkaufsverzögerungseinrichtung personalisiert werden und so als effektive Online-Einkaufshilfe eingesetzt werden.

Neben der Verhinderung der Ursprungs-Online-Einkäufe ist es auch für die praktische Anwendung der Einkaufsverzögerungseinrichtung vorteilhaft, dass die Einkaufsverzögerungseinrichtung dazu eingerichtet ist, zu unterscheiden was für Produkte gekauft werden und/oder wo Produkte gekauft werden (welcher Onlineshop). Daraus kann abgeleitet werden, dass ein Einkauf entgegen der Grundfunktion sofort durchgeführt wird, wenn es sich um Produkte handelt, bei denen durch manuelle Bestätigung oder durch die gesammelten Daten und eine Auswertung der Daten festgelegt worden ist, dass die Produkte "notwendige" sind (z.B. Toilettenpapier) bei denen es keiner Verzögerung bedarf, sondern eine Verzögerung im Gegenteil nicht praktikabel ist. So soll die praktische Anwendung der Einkaufsverzögerungseinrichtung gesichert und verbessert werden, um die in der Einleitung genannten Ziele zu erreichen.

Die Einkaufsverzögerungseinrichtung ist vorzugsweise dazu eingerichtet, die Kaufdaten zu analysieren und den festgelegten Verzögerungszeitraum auf Basis der Kaufdatenanalyse festzulegen. Dies kann beispielsweise mit einer Produktdatenbank erfolgen, in der Verzögerungszeiträume verschiedenen Produkten zugeordnet sind. Zudem können die festgelegten Verzögerungszeiträume auch auf Basis von historischen Einkaufsdaten automatisiert festgelegt werden.

Vorzugsweise kann das Autorisierungsmodul dem Nutzer den Ursprungs-Online-Einkauf zur erneuten Entscheidung als Zweit-Online-Einkauf anzeigen.

Vorzugsweise wird einem Nutzer durch eine grafische Anzeige durch den Zweit-Online-Einkauf eine Auswahl bereitgestellt den Ursprungs-Online-Einkauf vollständig, teilweise final gegenüber dem jeweiligen Verkäufer durchzuführen, diesen vollständig, teilweise zu verwerfen oder die Entscheidung über den Ursprungs-Online-Einkauf durch den Zweit-Online-Einkauf erneut zu verzögern/verschieben und mit einer neuen Verzögerungszeitraum zurückzustellen.

Vorzugsweise nutzt die Einkaufsverzögerungseinrichtung die durch das Speichermodul gespeicherten Daten zu den Ursprungs-Online-Einkäufen und führt eine mit dem Autorisierungsmodul empfangene Entscheidung in Form des Steuerbefehls aus, und der Nutzer wird auf eine Website des der Ursprungs-Online-Einkauf geleitet und/oder der Ursprungs-Online-Einkauf wird gegenüber dem jeweiligen Verkäufer automatisiert ausgelöst.

Vorzugsweise ist das Speichermodul zudem dazu eingerichtet, die gespeicherten Kaufdaten anhand einer Auswertungen durch ein bzw. das Auswertungsmodul zu kategorisieren.

Vorzugsweise wird das zuvor beschriebene Verfahren mit einer Einkaufsverzögerungseinrichtung ausgeführt, wobei die Einkaufsverzögerungseinrichtung ausgebildet ist nach einer der vorstehenden Ausführungsformen.

Es versteht sich generell zudem, dass ein Anzeigen auf einer grafischen Oberfläche des Endgerätes erfolgt, also beispielsweise auf dem Display eines Smartphones oder auf einem Computerbildschirm oder dergleichen.

Die vorliegende Erfindung wird nun nachfolgend exemplarisch anhand von Ausführungsbeispielen unter Bezugnahme auf die begleitenden Figuren näher erläutert:
- Fig. 1: zeigt ein schematisches Diagramm eines Aufbaus einer Einkaufsverzögerungseinrichtung zum Verzögern eines Online-Kaufes in einer erfindungsgemäßen Ausführungsform.
- Fig. 2: zeigt schematisch ein Flussdiagramm eines Verfahrens zum Verzögern eines Online-Kaufes.

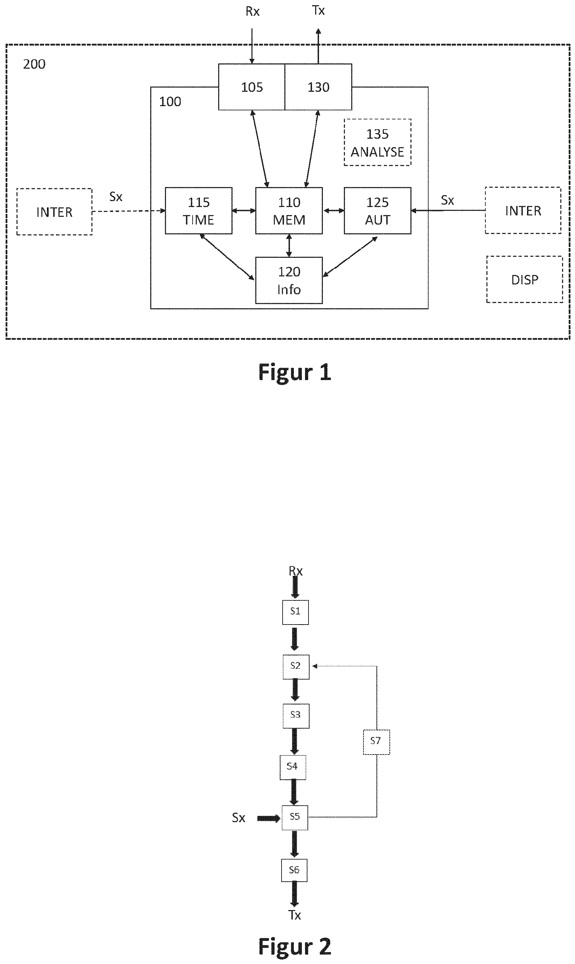

Die Figur 1 zeigt eine Einkaufsverzögerungseinrichtung 100 zum Verzögern eines Online-Kaufes.

Die Einkaufsverzögerungseinrichtung 100 umfasst ein Empfangsmodul 105 zum Empfangen von Kaufdaten und zum Verhindern einer Weiterleitung der Kaufdaten eines Ursprungs-Online-Einkaufes, wobei das Empfangsmodul 100 dazu eingerichtet ist, ein Weiterleiten der Kaufdaten an eine Zieladresse über ein Kommunikationsnetzwerk zu verhindern und die empfangenen Kaufdaten einem Speichermodul 110 bereitzustellen. Das Empfangen der Kaufdaten ist mit Pfeil Rx veranschaulicht. Ein Verhindern der Weiterleitung ist in der Figur 1 nicht explizit dargestellt.

Das Speichermodul 110 ist in der Figur 1 auch mit der Bezeichnung MEM dargestellt. Das Speichermodul ist ein Datenspeicher.

Das Speichermodul 110 ist dazu eingerichtet die bereitgestellten Kaufdaten zu speichern.

Das Verzögerungsmodul 115 ist dazu eingerichtet, die im Speichermodul 110 gespeicherten Kaufdaten nach Ablauf eines festgelegten Verzögerungszeitraumes einem Erinnerungsmodul 120 bereitzustellen. Dazu kann das Verzögerungsmodul auf das Speichermodul 110 zugreifen und die gespeicherten Kaufdaten dem Erinnerungsmodul 120 bereitstellen. Das Bereitstellen kann direkt durch das Verzögerungsmodul 115 erfolgen oder es wird zumindest von dem Verzögerungsmodul ausgelöst. Der festgelegte Verzögerungszeitraum kann dabei in dem Verzögerungsmodul als Timer hinterlegt sein, der mit den Kaufdaten individuell zugordnet wird. Die Timer können auch in der Speichereinheit 110 hinterlegt sein und das Verzögerungsmodul 115 Zugriff auf die hinterlegten Timer haben.

Das Erinnerungsmodul 120 ist dazu eingerichtet eine Kauferinnerung auszulösen, wenn der festgelegte Verzögerungszeitraum bzw. der Timer für den Ursprungs-Online-Einkauf abgelaufen ist, die in der dem Verzögerungsmodul hinterlegt sind. Beispielsweise ist eine Kauferinnerung eine Push-Up-Nachricht, die auf einem Display DISP auf einem Endgerät 200 angezeigt wird oder eine sonstige elektronische Benachrichtigung, wie eine E-Mail oder ein Softwarealarm oder dergleichen. Das Erinnerungsmodul 120 ist also dazu eingerichtet einen Benutzer an den Kauf nachträglich zu erinnern, nachdem der Kauf getätigt wurde.

Das Autorisierungsmodul 125 ist wenigstens dazu eingerichtet basierend auf einem empfangenen Autorisierungsbefehl Sx, ein Weiterleiten der im Speichermodul gespeicherten Kaufdaten des Ursprungs-Online-Einkaufes an ein Sendemodul 130 auszulösen. Das Weiterleiten kann direkt durch das Autorisierungsmodul 125 erfolgen oder es wird zumindest von dem Autorisierungsmodul ausgelöst.

Zudem umfasst die Einkaufsverzögerungseinrichtung 100 ein Sendemodul 130, das dazu eingerichtet ist, die weitergeleiteten Kaufdaten des Ursprungs-Online-Einkaufes aus dem Speichermodul 110 an die Zieladresse über das Kommunikationsnetzwerk abzusenden. Das Absenden der Kaufdaten ist mit Pfeil Tx veranschaulicht. Das Kommunikationsnetzwerk ist in der Figur 1 nicht gezeigt.

Die Figur 1 veranschaulicht zudem, dass die Einkaufsverzögerungseinrichtung 100 auf einem Endgerät 200 implementiert ist, das als Computer oder als Smartphone ausgebildet sein kann. Das Endgerät kann einen Display DISP aufweisen. An dem Display können Kauferinnerung des Erinnerungsmoduls 120 angezeigt werden und/oder eine Nutzerauswahl des Autorisierungsmodul 125 und/oder die Kaufdaten, die im Speichermodul 110 hinterlegten sind.

Zudem sind in der Figur zwei INTER Blöcke dargestellt, die Benutzerschnittstellen veranschaulichen. Eine erste Benutzerschnittstelle INTER kann vorgesehen sein, um die Steuerbefehle für das Autorisierungsmodul 125 einzugeben. Eine zweite oder die gleiche Benutzerschnittstelle DISP kann dazu vorgesehen sein, um den Verzögerungszeitraum oder mehrere Verzögerungszeitraum festzulegen oder nachträglich anzupassen, die dann in dem Verzögerungsmodul 105 angepasst werden.

Zudem sind die gezeigten Module untereinander zum Austausch von Daten und/oder zum Austausch von Zugriffbefehlen ausgebildet, was durch die Doppelpfeile visualisiert ist.

Die Einkaufsverzögerungseinrichtung 100 weist bevorzugt auch ein Auswertungsmodul 135 zur Auswertung von einem Nutzer getätigten Ursprungs-Online-Einkäufe und/oder Zweit-Online-Einkäufe auf, wobei das Auswertungsmodul dazu eingerichtet ist, Entscheidungsmuster durch einen Auswertungsalgorithmus vorangegangener Entscheidungen eines Nutzers zu erkennen und/oder individualisierte Vorschläge auf Basis der erkannten Entscheidungsmuster anzuzeigen, beispielsweise an dem Display DISP.

Die Figur 2 zeigt ein Verfahren zum Verzögern eines Online-Kaufes, das die Schritte umfasst:
S1: Empfangen und Verhindern einer Weiterleitung von Kaufdaten eines Ursprungs-Online-Einkaufes mit einem Empfangsmodul, wobei das Empfangsmodul dazu eingerichtet ist, ein Weiterleiten der Kaufdaten an eine Zieladresse über ein Kommunikationsnetzwerk zu verhindern und die empfangenen Kaufdaten einem Speichermodul bereitzustellen.
S2: Speichern der bereitgestellten Kaufdaten mit ein Speichermodul, das dazu eingerichtet ist, die bereitgestellten Kaufdaten zu speichern.
S3: Verzögertes Bereitstellen der im Speichermodul gespeicherten Kaufdaten nach Ablauf eines festgelegten Verzögerungszeitraumes an ein Erinnerungsmodul mit einem Verzögerungsmodul, das dazu eingerichtet ist, die im Speichermodul gespeicherten Kaufdaten nach Ablauf eines festgelegten Verzögerungszeitraumes dem Erinnerungsmodul bereitzustellen.
S4: Auslösen einer Kauferinnerung mit einem Erinnerungsmodul, das dazu eingerichtet ist, die Kauferinnerung auszulösen, wenn der festgelegte Verzögerungszeitraum für den Ursprungs-Online-Einkauf abgelaufen ist.
S5: Auslösen einer Weiterleitung der im Speichermodul gespeicherten Kaufdaten des Ursprungs-Online-Einkaufes an ein Sendemodul mit einem Autorisierungsmodul, das wenigstens dazu eingerichtet ist, basierend auf einem empfangenen Autorisierungsbefehl, ein Weiterleiten der im Speichermodul gespeicherten Kaufdaten des Ursprungs-Online-Einkaufes an ein Sendemodul auszulösen.
S6: Absenden der weitergeleiteten Kaufdaten des Ursprungs-Online-Einkaufes aus dem Speichermodul an die Zieladresse über ein Kommunikationsnetzwerk mit einem Sendemodul, das dazu eingerichtet ist, die weitergeleiteten Kaufdaten des Ursprungs-Online-Einkaufes aus dem Speichermodul an die Zieladresse über das Kommunikationsnetzwerk abzusenden.

Zudem ist in der Figur 2 der bevorzugte Schritt S7 gezeigt.

S7: Auswerten der mit dem Autorisierungsmodul empfangenen Autorisierungsbefehle, und und/oder Auswerten der empfangenen Einkaufsdaten.

Die in zur Figur 2 beschriebene Module können die gleichen Module sein, wie zur Figur 1 beschrieben.

### Bezugszeichenliste

- 100: Einkaufsverzögerungseinrichtung
- 105: Empfangsmodul
- 110: Speichermodul
- 115: Verzögerungsmodul
- 120: Erinnerungsmodul
- 125: Autorisierungsmodul
- 130: Sendemodul
- 135: Auswertungsmodul
- 200: Endgerät
- DISP: Display
- INTER: Benutzerschnittstelle
- Rx: Empfangene Kaufdaten
- Tx: Abgesendete Kaufdaten
- Sx: Autorisierungsbefehl

## Patentansprüche

1. Eine Einkaufsverzögerungseinrichtung (100) zum Verzögern eines Online-Kaufes umfassend,
- ein Empfangsmodul (105) zum Empfangen und zum Verhindern einer Weiterleitung von Kaufdaten eines Ursprungs-Online-Einkaufes, wobei das Empfangsmodul dazu eingerichtet ist, ein Weiterleiten der Kaufdaten an eine Zieladresse über ein Kommunikationsnetzwerk zu verhindern und die empfangenen Kaufdaten einem Speichermodul bereitzustellen;
- ein Speichermodul (110), das dazu eingerichtet ist, die bereitgestellten Kaufdaten zu speichern;
- ein Verzögerungsmodul (115), das dazu eingerichtet ist, die im Speichermodul gespeicherten Kaufdaten nach Ablauf eines festgelegten Verzögerungszeitraumes einem Erinnerungsmodul bereitzustellen;
- ein Erinnerungsmodul (120), das dazu eingerichtet ist, eine Kauferinnerung auszulösen, wenn der festgelegte Verzögerungszeitraum für den Ursprungs-Online-Einkauf abgelaufen ist;
- ein Autorisierungsmodul (125), das wenigstens dazu eingerichtet ist, basierend auf einem empfangenen Autorisierungsbefehl, ein Weiterleiten der im Speichermodul gespeicherten Kaufdaten des Ursprungs-Online-Einkaufes an ein Sendemodul auszulösen; und
- ein Sendemodul (130), das dazu eingerichtet ist, die weitergeleiteten Kaufdaten des Ursprungs-Online-Einkaufes aus dem Speichermodul an die Zieladresse über das Kommunikationsnetzwerk abzusenden.

2. Einkaufsverzögerungseinrichtung nach Anspruchs 1, wobei die Einkaufsverzögerungseinrichtung zudem ein Standbymodul aufweist, wobei das Standbymodul dazu eingerichtet ist, Einkaufsvorgänge zu erkennen und die übrigen Module der Einkaufsverzögerungseinrichtung zu aktivieren.

3. Einkaufsverzögerungseinrichtung (100) nach Anspruchs 1, wobei die Einkaufsverzögerungseinrichtung (100) zudem ein Auswertungsmodul (135) zur Auswertung von einem Nutzer getätigten Ursprungs-Online-Einkäufe und/oder Zweit-Online-Einkäufe aufweist, wobei vorzugsweise das Auswertungsmodul dazu eingerichtet ist, Entscheidungsmuster durch einen Auswertungsalgorithmus vorangegangener Entscheidungen eines Nutzers zu erkennen und/oder individualisierte Vorschläge auf Basis der erkannten Entscheidungsmuster anzuzeigen.

4. Einkaufsverzögerungseinrichtung (100) nach einem der vorstehenden Ansprüche, wobei das Speichermodul (110) zudem dazu eingerichtet ist, um die gespeicherten Kaufdaten zu kategorisieren, und vorzugsweise die kategorisierten gespeicherten Kaufdaten optisch anzuzeigen.

5. Einkaufsverzögerungseinrichtung (100) nach einem der vorstehenden Ansprüche, wobei das Verzögerungsmodul (115) zudem dazu eingerichtet ist, dass der Verzögerungszeitraum manuelle durch eine Nutzereingabe veränderbar ist und/oder das Verzögerungsmodul dazu eingerichtet ist, automatisiert den Verzögerungszeitraum zu bestimmen.

6. Einkaufsverzögerungseinrichtung (100) nach einem der vorstehenden Ansprüche, wobei das Erinnerungsmodul (120) zudem dazu eingerichtet ist, den Nutzer über den Ablauf des Verzögerungszeitraumes auf elektronischem Weg zu informieren und/oder dem Nutzer eine Auswahlmöglichkeit bereitstellt, direkt zur einer grafischen Benutzeroberfläche des Autorisierungsmoduls weitergeleitet zu werden, um dort die Kaufentscheidung zu bestätigen oder zu verwerfen oder zurückzustellen.

7. Einkaufsverzögerungseinrichtung (100) nach einem der vorstehenden Ansprüche, wobei das Autorisierungsmoduls (125) zudem dazu eingerichtet ist, Zusatzkaufdaten anzuzeigen, insbesondere um dem Nutzer bei einer erneuten Entscheidung einen erweiterten Entscheidungshorizont bereitzustellen.

8. Einkaufsverzögerungseinrichtung (100) nach einem der vorstehenden Ansprüche, wobei das Autorisierungsmoduls (125) zudem dazu eingerichtet ist, eine manuelle Nutzerauswahl anzuzeigen, wobei die Nutzerauswahl eine Bestätigungsauswahl, eine Ablehnungsauswahl und eine Zurückstellungsauswahl umfasst, und vorzugsweise bei
- einer Bestätigung des Ursprungs-Online-Einkaufes durch den Nutzer eine automatisierte Weiterleitung basierende auf den Kaufdaten zu einem Online-Shop erfolgt und/oder die hinterlegten Kaufdaten in den Online-Shop automatisiert eingefügt werden, und vorzugsweise zudem der Kauf automatisch ausgelöst wird, oder bei
- einer Ablehnung des Ursprungs-Online-Einkaufes durch den Nutzer der Kauf verworfen indem die Kaufdaten gelöscht, überschrieben oder in ein Archiv eingefügt werden, oder bei
- einer Zurückstellung des Ursprungs-Online-Einkaufes durch den Nutzer der Kauf mit einem neuen Verzögerungszeitraum in dem Speichermodul gespeichert werden.

9. Einkaufsverzögerungseinrichtung (100) nach einem der vorstehenden Ansprüche, wobei
- das Empfangsmodul mit wenigstens einer überlagerten Schaltfläche und/oder wenigstens einem überlagerten Eingabefeld eine Weiterleitung von Kaufdaten eines Ursprungs-Online-Einkaufes in einem Online-Shop verhindert, und/oder
- das Empfangsmodul dazu eingerichtet ist, wenigstens eine bestehende Schaltfläche und/oder wenigstens ein bestehendes Eingabefeld eines Online-Shops nachträglich anzupassen, um die Weiterleitung von Kaufdaten eines Ursprungs-Online-Einkaufes an den Online-Shop zu verhindern und/oder
- das Empfangsmodul mit einer sonstigen elektronischen Schnittstelle dazu eingerichtet, die Weiterleitung von Kaufdaten eines Ursprungs-Online-Einkaufes an einen Online-Shop zu verhindern, und/oder
- das Empfangsmodul dazu eingerichtet, Eingaben in ein online Formularzu erkennen und eine Weiterleitung von in das online Formular eingegebenen Kaufdaten zu verhindern, um die Weiterleitung von Kaufdaten eines Ursprungs-Online-Einkaufes an einen Online-Shop zu verhindern.

10. Einkaufsverzögerungseinrichtung (100) nach einem der vorstehenden Ansprüche, wobei das Sendemodul (130) zum automatischen Ausfüllen von Eingabefeldern eines Online-Shops mit den gespeicherten Kaufdaten eingerichtet ist.

11. Verfahren zum Verzögern eines Online-Kaufes, umfassend die Schritte:
- Empfangen (S1) und Verhindern einer Weiterleitung von Kaufdaten eines Ursprungs-Online-Einkaufes mit einem Empfangsmodul (105), wobei das Empfangsmodul dazu eingerichtet ist, ein Weiterleiten der Kaufdaten an eine Zieladresse über ein Kommunikationsnetzwerk zu verhindern und die empfangenen Kaufdaten einem Speichermodul (110) bereitzustellen;
- Speichern (S2) der bereitgestellten Kaufdaten mit ein Speichermodul (110), das dazu eingerichtet ist, die bereitgestellten Kaufdaten zu speichern;
- Verzögertes Bereitstellen (S3) der im Speichermodul (110) gespeicherten Kaufdaten nach Ablauf eines festgelegten Verzögerungszeitraumes an ein Erinnerungsmodul (120) mit einem Verzögerungsmodul (115), das dazu eingerichtet ist, die im Speichermodul (110) gespeicherten Kaufdaten nach Ablauf eines festgelegten Verzögerungszeitraumes dem Erinnerungsmodul (120) bereitzustellen;
- Auslösen (S4) einer Kauferinnerung mit einem Erinnerungsmodul (120), das dazu eingerichtet ist, die Kauferinnerung auszulösen, wenn der festgelegte Verzögerungszeitraum für den Ursprungs-Online-Einkauf abgelaufen ist;
- Auslösen einer Weiterleitung (S5) der im Speichermodul (110) gespeicherten Kaufdaten des Ursprungs-Online-Einkaufes an ein Sendemodul (130) mit einem Autorisierungsmodul (125), das wenigstens dazu eingerichtet ist, basierend auf einem empfangenen Autorisierungsbefehl (Sx), ein Weiterleiten der im Speichermodul (110) gespeicherten Kaufdaten des Ursprungs-Online-Einkaufes an ein Sendemodul (130) auszulösen; und
- Absenden (S6) der weitergeleiteten Kaufdaten des Ursprungs-Online-Einkaufes aus dem Speichermodul (110) an die Zieladresse über ein Kommunikationsnetzwerk mit einem Sendemodul (130), das dazu eingerichtet ist, die weitergeleiteten Kaufdaten des Ursprungs-Online-Einkaufes aus dem Speichermodul (110) an die Zieladresse über das Kommunikationsnetzwerk abzusenden.

12. Verfahren nach Anspruch 11, wobei das Verfahren mit einer Einkaufsverzögerungseinrichtung (100) ausgeführt, wobei die Einkaufsverzögerungseinrichtung (100) ausgebildet ist nach einem der vorstehenden Ansprüche 1 bis 10.

13. Verfahren nach Anspruch 11 oder 12, wobei das Verfahren den zusätzlichen Schritt umfasst,
- Auswerten (S7) der mit dem Autorisierungsmodul empfangenen Autorisierungsbefehle und/oder Auswerten der empfangenen Einkaufsdaten.
